# EUROPEAN PATENT APPLICATION

(11) **EP 2 790 414 A1**
(43) Date of publication of application: **15.10.2014**
(21) Application number: 13305481.7
(22) Date of filing: 12.04.2013
(51) Int. Cl.: H04Q 9/00, G08B 25/00, G01D 1/18

(54) **Measurement-aware radio for sensors**

(71) Applicant: ALCATEL LUCENT, 92100 Boulogne-Billancourt (FR)
(72) Inventor: Fonseca dos Santos, Andre, 70435 Stuttgart (DE); Doetsch, Uwe, 70435 Stuttgart (DE)
(74) Representative: Wetzel, Emmanuelle

(57) **Abstract**

A method for sending a measurement value to a base station is proposed. The method is executed in a user equipment device. A measurement value by a sensor means is determined. The measurement value is compared with a reference value. If the result of the comparing step exceeds a threshold, the measurement value is sent to the base station. Further, sensor devices and corresponding base stations are proposed.

## Description

### FIELD OF THE INVENTION

The present invention relates to communication between user equipment devices and base stations in a cellular network.

### BACKGROUND OF THE INVENTION

This section introduces aspects that may be helpful in facilitating a better understanding of the invention. Accordingly, the statements of this section are to be read in this light and are not to be understood as admission about what is in the prior art.

In enhanced 4G wireless systems and especially in future 5G wireless systems, a large number of devices, e.g. user equipment devices (UE), will be present in the coverage area of a base station, e.g. an eNodeB. For scenarios known by the paradigm "Internet of Things", it is predicted that a factor of 10 times to 100 times machines/sensors per user will be deployed up to 2020. Several applications for such machines will require nation-wide coverage and easy access to the internet. In the light of that, 3GPP has started up efforts on the extension of LTE for example for supporting machine transmission modes. One challenge to overcome is the utter amount of devices connecting to the network. This is likely to generate overloads on the access attempts in the system and a lot of additional control signaling. The current investigation in 3GPP is on the radio access for the sensors and machines. It is expected that this will reduce the overload problem in some cases, but further solutions are needed to address this issue.

### SUMMARY OF THE INVENTION

It is an object of the invention to adapt communication schemes in a scenario as described above in order to reduce the problem of overloads and additional control signaling.

According to one embodiment, a method for sending data by a sensor device is proposed. The method is executed in a sensor device having at least a transmission functionality. When a measurement is performed by a sensor means in the sensor device, a measurement value is determined. This measurement value is compared to a reference value, and a difference between the reference value and the measurement value is determined. If this difference exceeds a certain threshold, a data transmission between a first device and the sensor device is arranged, and the data related to the measurement value is sent to the first device. A first device may be a base station in a 4G wireless system scenario or 5G wireless system scenario. It may also be another sensor device in a machine to machine (M2M) scenario. The first device may be of a higher hierarchical structure in the network, e.g. a master device, wherein the sensor devices are slave devices. The sensor devices may be dedicated devices for measuring data and providing data related to the measurement value via a transmission interface. On the other hand, the sensor device may be a user equipment device in a 4G wireless system scenario or 5G wireless system scenario. Further, the transmission interface may be any communication interface, e.g. an air interface, a wired line interface, an optical interface or the like. This has the advantage that the inherent characteristics of machine to machine (M2M) communication are exploited. M2M communication, e.g. between a sensor and a base station, differs from human communication significantly, e.g. in spatial correlation and the time predictability of the signals which are transmitted. For example, in case of the measurement of temperature, the sensors that are located close to each other produce correlated measurement values and the temperature along the day can be usually well predicted. According to the method it is first determined if the reference value and the measurement value differ. Thus the advantage is realized that the sensors perform distributed decisions if a transmission to the first device is advisable. If the transmission would not provide new information to the first device, because the reference value and the measurement value do not differ by more than a threshold, the transmission is not performed and thus, the network is not occupied by unnecessary transmissions. On the other hand, if the difference between the measurement value and the reference value exceeds a certain threshold, the transmission is established and data related to the measurement value is sent to the first device. Data related to the measurement value may be e.g. the measurement value itself, the measurement value that is rounded or otherwise simplified or a difference between the measurement value and the reference value. Thus, especially in case of a large number of sensor nodes, data traffic over the network is reduced significantly if unnecessary transmissions are omitted or reduced. A further advantage of avoiding unnecessary data transmission between the first device and the sensor devices is that the power consumption in the sensor devices is reduced. Especially in case of sensor networks, in which the battery lifetime determines the lifetime of the sensors, the time of sensor usability can be enhanced this way. In general, in sensor networks, the main part of the overall power consumption is caused by data transmission.

Thus, avoiding unnecessary transmissions has a huge effect on sensor lifetime. The measurements are either performed continuously, sporadically or scheduled by the sensors. In addition, there are different equivalents within the scope of the invention to implement the decision about sending data related to the measurement value. For example, if the difference between the reference value and the measurement value exceeds the threshold a first time, data related to the measurement value may be sent to the first device. On the other hand, only if the difference between the reference value and the measurement values exceed the threshold for multiple consecutive measurements or for most of these multiple consecutive measurements, data related to the measurement value may be sent to the first device. Further, if the difference between the reference value and the measurement values exceeds a threshold for all or most measurements performed within a specific time period, data related to the measurement value may be sent to the first device. Thus, individual measurements which might be inaccurate are neglected this way and do not trigger sending new data related to the measurement value to the first device.

In one embodiment, the sending step is done asynchronously. A random access uplink transmission is established and the data is sent. Random access is especially efficient for short packets and sporadic transmissions. Such sporadic transmissions occur, by way of example only, in case of transmission of measurement values. Sporadic transmissions do not occur e.g. in case of transmitting huge amount of data. The efficiency of random access for sporadic transmissions is due to the reduced signaling overhead and the distributed nature of the decisions. In contrast to known schemes, such as ALOHA, CSMA or RTS/CTS, which assume uncorrelated and non predictable sources, this invention establishes an approach for the transmission of the sensor data exploiting the sensors/machines correlation and predictability. In this way, the access attempts of the sensors are significantly decreased by cutting any redundant transmissions of the measurements. This is advantageous for M2M communication, due to the fact that the measurements of the sensors causing M2M communication are usually predictable and correlated, in contrast to communication generated by humans, i.e. by smart phones.

In one embodiment, the reference value is received from the first device via broadcast or multicast. The reference value is transmitted when initializing the system and/or is transmitted regularly by the first device. Alternatively or in addition, the transmission of new reference values by the first device is triggered by receiving data related to a new measurement value from one of the sensor devices or after receiving data related to new measurement values from multiple sensor devices. One or more downlink signals may provide one or more reference values for the sensor devices.

In one embodiment, the reference value received from the first device is a value derived from data related to measurements which were previously transmitted to the first device by one or more sensor devices. Thus, the reference value is correlated to the measurements from one or more sensor devices received by the first device. In one embodiment, the reference value received from the first device is a value predicted by the first device. By estimating further values either by prediction or by using recently transmitted data or the like, the communication extent in the system is reduced because only transmissions of sensor data take place if the really measured values depart from the reference value transmitted by the first device.

In one embodiment, each sensor device receives the reference value and an average gap to this reference value. The average gap from the reference value for each sensor device does not change significantly over time. For example, if multiple sensors are measuring temperature and there is a certain temperature gradient in the area of the measurement, the temperature differences from one sensor to another will stay the same. But the measured absolute temperature will change according to the time of the day (morning, noon, evening) or the month (summer months, winter months). Thus, only a new reference value needs to be distributed later, and the sensor devices compute their updated reference value by using the distributed reference value valid for all sensor devices and their individual average gap to this distributed reference value. This has the advantage that the spatial correlation of the sensors, which is known by the system, is used. Only one reference value is transmitted and a spatial discrimination between sensor devices is realizable.

In one embodiment, the signal received from the first device containing the reference value further contains information for random access control, e.g. clear to send may be transmitted together with the reference value. This has the advantage that the efficiency is further enhanced, if signaling information is broadcast or multicast together with the reference value information.

In one embodiment, more than one downlink connections from more than one first devices are received by one sensor device. This way, the correlation between sensor devices is further enhanced by using feedback information via multiple first devices.

In one embodiment, the sensor devices are grouped in clusters and the reference values of the sensor devices of one cluster are correlated. This has the advantage, especially in case where a huge number of sensor devices is present, that the sensor devices and the expected measurement results are hierarchically structured.

According to one embodiment, a method for determining a reference value in a first device is proposed. The method comprises a step of receiving date related to a measurement value from a sensor device. Further, the reference value is updated in correspondence with the data related to a measurement value received, and the updated reference value is sent via broadcast or multicast to the sensor devices. The advantages described above are realized if the sensor devices and the first device cooperate this way. It is especially beneficial in case of M2M communication, e.g. between sensors and a base station. The first device uses the predictability of the signals which are received from the sensor devices. Especially in case of a large number of sensors and predictable measurement results, data traffic over the network is reduced significantly if unnecessary transmissions are omitted or reduced. There are different equivalents within the scope of the invention to implement the step of updating the reference value in correspondence with the data received. For example, if new data related to a measurement value is received for the first time, the reference value may be updated and sent to the sensor devices. On the other hand, only if a consecutive number of measurement values differing from the actual reference value by at least a threshold and data related hereto is received by the first device, the reference value may be updated and sent to the sensor devices. Further, only if measurement values which are originating from different sensor devices and which are differing from the actual reference value by at least a threshold and data related hereto is received by the first device, the reference value may be updated and sent to the sensor devices. Thus, individual measurements which might be inaccurate are neglected this way and do not trigger updating the reference value and sending it to the first device.

In one embodiment, an average gap for one or more sensor devices to the reference value is determined. The sensor devices know the average gap to the reference value or get informed about this average gap. This has the advantage that the spatial correlation of the sensor devices is used. The reference value valid for all sensor devices is then transmitted to the sensor devices. Each sensor device determines its individual reference value by the distributed reference value and the average gap to this reference value. If the reference value valid for all sensor devices is updated according to the method described above, each sensor device uses the updated reference value and the average gap to the reference value to determine a new individual reference value for the corresponding sensor devices.

In one embodiment, the signal for sending the reference value further contains information for random access control. This has the advantage that the efficiency is further enhanced, if signaling information is broadcast or multicast together with the reference value information.

In one embodiment, the sensor devices are grouped in clusters and updated reference values for the sensor devices of one cluster are correlated. This has the advantage, especially in case where a huge number of sensor devices is present, that the sensor devices and the reference values are hierarchically structured.

In one embodiment, an apparatus for sending data related to a measurement value of a sensor device in a transmission system is proposed, the apparatus having at least a transmission functionality, wherein the apparatus performs a method according to the embodiments for sending a measurement value as described above. The apparatus for sending data related to a measurement value comprises a sensor means for determining a measurement value. The apparatus further comprises a comparison unit for comparing the measurement value with a reference value. Further, a decision unit decides if data should be sent in dependence of the output of the comparison unit. The transceiver is further for sending data related to the measurement value in dependence of the output of the decision unit.

In one embodiment, an apparatus for determining a reference value in a transmission system is proposed, wherein the apparatus performs a method according to the embodiments for determining a reference value as described above. The apparatus for determining a reference value in a transmission system comprises a transceiver for receiving data related to a measurement value. The apparatus further comprises a decision unit for deciding if a reference value needs to be updated and if so, updating the reference value in correspondence with the data received. The transceiver is further for sending the reference value via broadcast or multicast.

In one embodiment, a transmission system for sending measurement values from a user equipment device to a base station is proposed. The transmission system comprises at least one apparatus for sending data related to a measurement value as described above. Further, the transmission system comprises at least one apparatus for determining a reference value as described above.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a machine-type communication scenario
- Fig. 2: schematically illustrates the interaction between a user equipment devices and a base station
- Fig. 3: schematically illustrates a user equipment device
- Fig. 4: schematically illustrates a base station

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

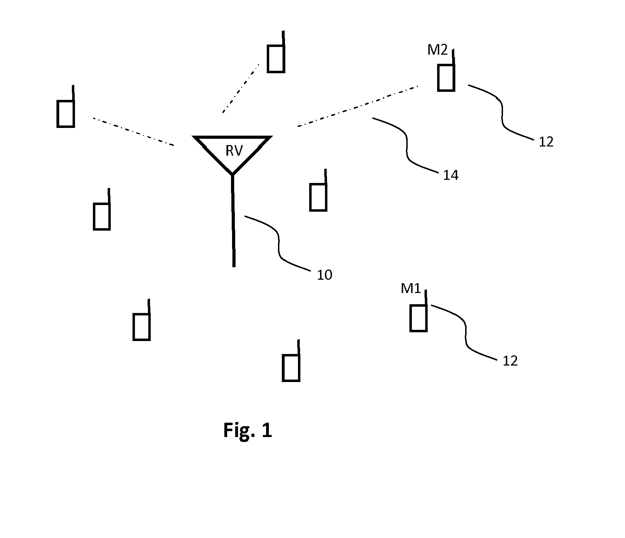

Fig. 1 shows a machine type communication scenario according to a preferred embodiment, comprising a first device, e.g. a base station 10 in a 4G wireless system or a 5G wireless system, and associated sensor devices, e.g. user equipment devices 12. The term user equipment device 12 is to be understood to cover sensor devices in a sensor network, other known user equipment devices like mobile phones comprising sensors, which might transmit and receive data with or without the interaction of a human being and other fixed installed or mobile communication devices able to transmit and receive data. The user equipment devices 12 and the base station 10 are located within the communication range of these devices and communication is performed via a transmission channel 14, which is e.g. a wireless transmission channel. In case of short data packets and sporadic transmissions, random access based access is used. In case the user equipment devices 12 are e.g. sensor devices, which perform e.g. temperature, light intensity or humidity measurements on a regular basis, sporadic data transfer with short data packets occurs. Other examples for such a scenario are sensor devices for determining fire, distributed e.g. in a forest to report potential fires or risk of fire according to a temperature. Such sensor devices are also referred to as user equipment devices in the following. In such a scenario, e.g. a slotted ALOHA protocol is used. In this context, ALOHA means whenever a user equipment device 12 has to transmit information, it promptly transmits a packet and waits for an ACK. If after a predefined time the user equipment device 12 does not receive an ACK, it retransmits the packet using a random waiting time. The parameters regarding this waiting time are set by the base station 10. Other random access communication schemes may be used instead. By performing measurements, the user equipment devices 12 generate measurement values M1, M2. In addition, the base station 10 defines a reference value RV, which is described in more detail in the following.

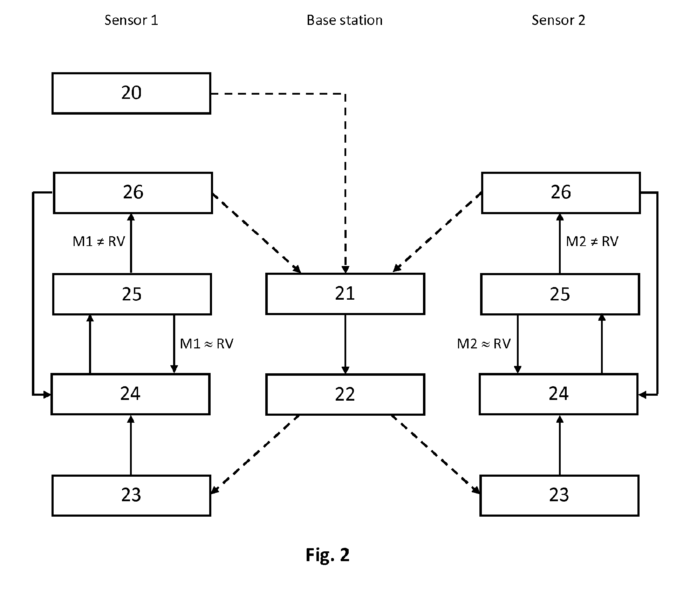

Fig. 2 schematically illustrates the corresponding steps performed in an embodiment including one base station 10 and two user equipment devices 12. For sake of simplicity only two user equipment devices 12, e.g. sensor devices are addressed, even if in a system according to the invention a huge number of user equipment devices 12 may be available within the range of one base station 10. In a first step, the system is initialized. At the beginning, no reference value RV is available in the base station 10, e.g. because no data related to a measurement value M1, M2 has been received by the base station 10 so far. A first user equipment device 12 determines 20 a measurement value M1 and transmits data related to it to the base station 10. The base station 10 receives 21 data and updates 21 the reference value RV. As the reference value RV might be not available in the initialization phase, updating in this context means a reference value RV is set the first time. Then, the updated reference value RV is broadcast 22 to the user equipment devices 12. The user equipment devices 12 receive 23 the broadcast reference value RV. The user equipment devices 12 perform measurements 24 on a regular basis, e.g. measurements are performed by the sensors either continuously, sporadically or scheduled. Different user equipment devices 12 may have different schedules for the measurements. In addition, a measurement schedule may be decided solely by the user equipment device 12 or it may be advised by the base station 10 to the user equipment devices 12. After performing a measurement 24, the user equipment device 12 compares 25 the measurement value M1, M2 with a reference value RV stored in the user equipment device 12. If the measurement values M1, M2 are equal or similar M1 ≈ RV, M2 ≈ RV to the reference value RV, the user equipment device 12 decides that there is no need to send data related to the measurement value M1, M2 to the base station 10. The user equipment device 12 performs the next measurement 24 according to the measurement schedule. Similarity M1 ≈ RV, M2 ≈ RV of the measurement value M1, M2 and the reference value RV is assumed, if the two values differ by less than a threshold. If the measurement values M1, M2 differ from the reference value RV by more than the threshold M1 ≠ RV, M2 ≠ RV, the user equipment device 12 sends 26 data related to the measurement value M1, M2 to the base station 10 and performs the next measurement 24 according to the measurement schedule. The decision if data related to a measurement value M1, M2 is send to the base station may be taken according to a more complex scheme. For example, if the difference between the reference value RV and the measurement value M1, M2 exceeds the threshold a first time, data related to the measurement value M1, M2 may be sent 26 to the base station 10. On the other hand, only if the difference between the reference value RV and the measurement values M1, M2 exceed the threshold for multiple consecutive measurements or for most of these multiple consecutive measurements, data related to the measurement value M1, M2 may be sent 26 to the base station 10. Further, if the difference between the reference value RV and the measurement values M1, M2 exceeds a threshold for all or most measurements performed within a specific time period, data related to the measurement value M1, M2 may be sent 26 to the base station 10. In addition, according to one embodiment, after data related to a measurement value M1, M2 has been sent 26 to the base station 10, there may be some time period in which no data is sent to the base station 10 in order to allow the base station 10 to receive the data related to the new measurement value M1, M2 and distribute a new reference value RV if adequate. After data related to the measurement value M1, M2 has been sent to the base station 10, the base station 10 receives 21 the data related to the new measurement value M1, M2 and decides if the reference value RV for one or more user equipment devices 12 needs to be updated. If there is a need to update the reference value RV, the base station 10 transmits 22 the new reference value RV to one or more user equipment devices 12 by broadcast or multicast. The base station 10 may decide if there is a need to update the reference value RV according to a specific scheme, e.g. when receiving the first data related to a measurement value M1, M2 differing from the reference value RV, after receiving multiple data related to measurement values M1, M2 differing from the reference value RV, after receiving multiple data related to measurement values M1, M2 from different user equipment devices 12 differing from the reference value RV, after receiving data related to measurement values M1, M2 from specific user equipment devices 12 differing from the reference value RV, etc. According to one embodiment, the base station 10 predicts values in time and space which will be measured in future. This is done e.g. by learning the behavior of the user equipment devices 12 through time. Further, an interface in the user equipment device 12 may be provided according to one embodiment, allowing the base station 10 to have access to the measurement values M1, M2. A predictor of the measurement values M1, M2 in the base station 10 predicts values which are then transmitted to the user equipment devices 12. The user equipment devices 12 use the predicted values as reference values RV and compare their measurement values M1, M2 with these reference values RV in order to check the necessity of the transmission. In a network working with spatial correlation of the sensors, the base station 10 may broadcast a single reference value RV, e.g. the prediction value for one user equipment device 12, and informs the other user equipment devices 12 about this reference value RV and about their average gap to this reference value RV. The other user equipment devices 12 consider the reference value RV and their average gap to calculate their individual reference value and to decide if their measurement values M1, M2 are similar to their individual reference value or not. In one embodiment, the base station 10 informs the user equipment devices 12 which difference is required between the reference value RV and the measurement value M1, M2 to justify a transmission of data related to the measurement value M1, M2. In one embodiment, data related to the measurement value M1, M2 is only sent after multiple consecutive measurement values M1, M2 differing from the reference value RV have been measured. In one embodiment, the user equipment devices 12 are grouped in clusters for which correlated measures are expected and a base station provides different clusters with different reference values RV. In one embodiment, a predefined set of sequences for measurement values M1, M2 is defined. The user equipment devices 12 transmit 26 data related to the measurement value and the corresponding sequence to the base station 10. The base station 10 then transmits 22 regularly corresponding sequences for reference values RV.

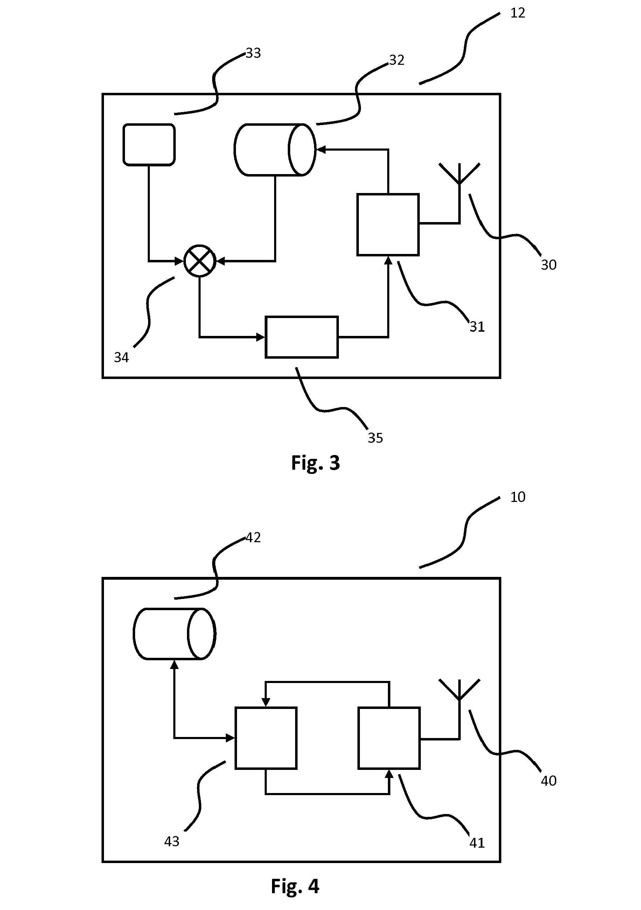

In Fig. 3, a schematic overview of a user equipment device 12 according to a preferred embodiment is shown. It is understood that only elements related to the invention are indicated in Fig. 3, but that a user equipment device 12 comprises additional means for performing its functionality. Such means are well known in the art and thus, are not mentioned explicitly. A user equipment device 12 comprises an antenna 30, which is connected to a transceiver unit 31 for sending and receiving data over the air interface. The user equipment device 12 transmits data to the base station 10 via the transceiver unit 31 and receives data from the base station 10. If a reference value RV is received via the transceiver unit 31, the reference value RV is stored in a storage unit 32. Further, the user equipment device 12 comprises a measurement unit 33, e.g. a sensor or other type of data acquisition unit, providing measurement values M1, M2. Further, the user equipment device 12 comprises a comparison unit 34, which compares the reference value RV stored in the storage unit 32 and the measurement value M1, M2 provided by the measurement unit 33. The output of the comparison unit 34 is the difference between the measurement value M1, M2 and the reference value RV. This difference is checked by a decision unit 35. If the difference exceeds a threshold, the decision unit 35 instructs the transceiver unit 31 to send data related to the measurement value M1, M2 to the base station 10. Data related to a measurement value M1, M2 may be the measurement value M1, M2 itself, the difference determined by the comparison unit 34 or the like. The decision unit 35 may follow a more complex scheme before instructing the transceiver unit 31 to send data related to the measurement value M1, M2 as described above.

In Fig. 4, a schematic overview about a base station 10 according to a preferred embodiment is shown. It is understood that only elements related to the invention are indicated in Fig. 4, but that a base station 10 comprises additional means for performing its functionality. Such means are well known in the art and thus, are not mentioned explicitly. A base station 10 comprises an antenna 40, which is connected to a transceiver unit 41 for sending and receiving data over the air interface. The base station 10 receives data from the user equipment device 12 via the transceiver unit 41 and transmits data to the user equipment devices 12. If data related to a measurement value M1, M2 is received via the transceiver unit 41, a decision is made in a decision unit 43 if the reference value RV needs to be adapted. If the measurement value M1, M2 differs from the reference value RV by more than a threshold, a new reference value RV is computed by the decision unit 43 and is stored in a storage unit 42. The decision unit 43 may follow a more complex scheme before computing a new reference value RV as described above. The new reference value RV may be equal to the last measurement value M1, M2 received or may be computed according to a more complex scheme considering measurement values M1, M2 of the past and using advanced prediction techniques to predict possible measurement values M1, M2 in the future. When a new reference value RV is set, the decision unit 43 also instructs the transceiver unit 41 to broadcast the new reference value RV.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for sending data by a sensor device having at least a transmission functionality, comprising the steps:
- determining (24) a measurement value (M1, M2) by a sensor means (33),
- comparing (25) the measurement value (M1, M2) with a reference value (RV), and
- sending (26) data related to the measurement value (M1, M2) if the result of the comparing step exceeds a threshold.

2. Method for sending data according to claim 1, wherein the step of sending the data comprises:
- establishing a random access uplink transmission to a first device (10).

3. Method for sending data according to claim 1 or 2, wherein the reference value (RV) is received (23) at a receiving interface via broadcast or multicast.

4. Method for sending data according to claim 3, wherein the reference value (RV) received is derived from data related to measurement values (M1, M2) which were previously transmitted (10) by one or more sensor devices (12).

5. Method for sending data according to one of claims 3 to 4, wherein a sensor device (12) receives (23) a reference value (RV) and an average gap to this reference value (RV).

6. Method for sending data according to one of claims 3 to 5, wherein a signal received containing the reference value (RV) further contains information for random access control.

7. Method for sending data according to one of claims 3 to 6, wherein more than one downlink connections are received.

8. Method for sending data according to one of claims 1 to 7, wherein the sensor devices (12) are grouped in clusters and reference values (RV) of sensor devices (12) of one cluster are correlated.

9. Method for determining a reference value, comprising the steps:
- receiving (21) data related to a measurement value (M1, M2) ,
- updating (21) the reference value (RV) in correspondence with the data received, and
- sending (22) the reference value (RV) via broadcast or multicast.

10. Method for determining a reference value according to claim 9, wherein an average gap for one or more sensor devices (12) to the reference value (RV) is determined and the average gap is distributed to the sensor devices (12).

11. Method for determining a reference value according to claim 9 or 10, wherein the signal for sending the reference value (RV) further contains information for random access control.

12. Method for determining a reference value according to claim 9 or 11, wherein the sensor devices (12) are grouped in clusters and updated reference values (RV) of sensor devices (12) of one cluster are correlated.

13. Apparatus for sending data, comprising:
- a sensor means (33) for determining a measurement value (M1, M2) ;
- a comparison unit (34) for comparing the measurement value (M1, M2) with a reference value (RV);
- a decision unit (35) for deciding if data should be sent in dependence of the output of the comparison unit (34); and
- a transceiver (31) for sending data related to the measurement value (M1, M2) in dependence of the output of the decision unit (35).

14. Apparatus for determining a reference value in a transmission system, comprising:
- a transceiver (41) for receiving data related to a measurement value (M1, M2);
- a decision unit (43) for deciding if a reference value (RV) needs to be updated and if so, updating the reference value (RV) in correspondence with the data received; and
- the transceiver (41) is further for sending the reference value via broadcast or multicast.

15. Transmission system for sending measurement values from a user equipment device to a base station, the transmission system comprises at least one apparatus for sending data according to claim 13 and an apparatus for determining a reference value according to claim 14.
